Europäisches Patentamt

European Patent Office

Office européen des brevets

(11) Publication number: **0 308 089**
**A2**

## EUROPEAN PATENT APPLICATION

(21) Application number: 88307815.6

(22) Date of filing: 24.08.88

(51) Int. Cl.⁴: **C08J 5/18 , C08L 23/04 , C08L 75/04 , //(C08L23/04, 75:04)**

(30) Priority: 31.08.87 US 91578

(43) Date of publication of application:
**22.03.89 Bulletin 89/12**

(84) Designated Contracting States:
**BE DE FR GB IT NL**

(71) Applicant: **MOBIL OIL CORPORATION**
**150 East 42nd Street**
**New York New York 10017(US)**

(72) Inventor: **Su, Tien-Kuei**
**7 Adams Drive**
**Belle Mead New Jersey 08502(US)**
Inventor: **Shaw, Richard Gregg**
**R.D. No. 1, Box 104**
**Remsen New York 13438(US)**

(74) Representative: **Colmer, Stephen Gary**
**Patent Department c/o Mobil Services**
**Company Limited Mobil Court 3 Clements**
**Inn**
**London WC2A 2EB(GB)**

(54) **Blends and films of linear ethylene polymers with polyurethane, and method of their extrusion.**

(57) Head pressure and extruder torque in the extrusion of linear ethylene polymers such as linear low density polyethylene (LLDPE) are reduced by adding a small amount (less than 5 weight percent) of a thermoplastic polyurethane. Films extruded from the blend exhibit better surface appearance by reduction of melt fracture.

EP 0 308 089 A2

# BLENDS AND FILMS OF LINEAR ETHYLENE POLYMERS WITH POLYURETHANE, AND METHOD OF THEIR EXTRUSION

It is well known that LLDPE (linear low density polyethylene) such as copolymers of ethylene and hexene generally produce films of superior properties over high pressure highly branched low density polyethylenes (LDPE). LLDPE films exhibit higher tensile strength, outstanding puncture resistance and enhanced impact strength. Similarly linear ethylene polymers such as high density polyethylene exhibit excellent properties for some purposes. However, the extrudability of linear ethylene polymers including LLDPE is poor mainly because of their high shear viscosity. Due to the absence of long chain branching in LLDPE its shear viscosity exhibits less shear thinning than branched LDPE. This non-Newtonian rheological behavior brings about extrusion difficulties by increasing extrusion head pressure resulting in high motor amperage and high torque which limits the output under a given set of extrusion conditions compared to that possible with prior art LDPE resins.

Furthermore, the extrusion problem is frequently accompanied by the appearance of surface irregularities on the produced film. Surface irregularities or more generally, "melt fracture" occur over a range of shear rate depending on the molecular characteristics of the polymer. These are characterized by closely spaced circumferential ridges along the extrudate when extruded through a capillary die. In a more severe form it resembles what is generally known as "sharkskin." The onset of melt fracture is believed to occur at or above a critical shear stress although the concept is yet to be fully understood.

In the past many attempts were made to alleviate the extrusion problems encountered with LLDPE. For example, blends of linear low density polyethylenes with LDPE (branched high pressure low density polyethylene) are known. The use of various kinds of processing aids such as low molecular weight hydrocarbons, fatty amides or bis-amides, fluorelastomers and certain silicon polymers is also known.

U.S. Patent 3,970,715 describes compositions comprising a major proportion of a thermoplastic polyurethane and a minor proportion of an ethylene copolymer such as ethylene vinyl acetate copolymer to improve the abrasion and the blocking characteristics of the polyurethane.

In accordance with this invention a minor amount of a thermoplastic polyurethane is added to a linear ethylene polymer to improve its extrusion behavior. A small amount, 0.01 to 5.0 weight percent, of a thermoplastic polyurethane polymer is added to a linear polyethylene as a processing aid resulting in reduced head pressure and power consumption during extrusion into films permitting higher output rates. The polyurethane also contributes to improved surface appearance of the films by reduction or elimination of melt fracture commonly encountered in the extrusion of linear ethylene polymers.

The linear ethylene polymers whose extrusion behavior is improved in accordance with this invention are either homopolymers of ethylene or copolymers of ethylene and a higher olefin, particularly linear low density polyethylene LLDPE. The LLDPE generally contains up to 10 weight percent of polymerized higher alpha olefin and has a density between 0.9 to 0.94, preferably less than 0.930. The melt index (MI) is usually from 0.4 to about 4 or more and preferably from 0.6 to 2. LLDPE copolymers of ethylene and hexene are particularly preferred.

The thermoplastic polyurethane additives are commercially available materials. A wide variety of such materials are suitable such as described in the following examples and as described in U.S. Patent 3,970,715 which is incorporated herein by reference. The polyurethane is generally added in the smallest amount needed to achieve its purpose, usually 0.01 to 5 weight percent and preferably 0.05 to 3 weight percent.

As in other polyolefin compositions, stabilizers, antioxidants, plasticizers, pigments, fillers and similar additives can be incorporated into the blends of the present invention. The compositions of the present invention can be fabricated into film, fiber, sheeting, rod, tubing, pipe and a variety of molded objects, using methods generally employed in the fabrication of polyolefins. In particular, the compositions of the present invention are outstanding as film resins.

The blends of this invention can be prepared in any way known to those skilled in the art. Thus, a physical mixture of the polymers in powder or in pellet form can be blended into a uniform composition in a Banbury mixer or by milling the composition on calendar rolls using temperatures above the melting point of the higher melting component. In a preferred embodiment, a rough mixture of the polymers is put through a melt extruder containing a mixing extrusion screw or a mixing section on the extrusion screw. The resins may also be in the form of granules and may be blended as either granules or pellets or mixtures thereof. Other means of obtaining a homogeneous blend will be apparent to those skilled in the art.

The invention is illustrated by the following examples in which all parts are by weight unless otherwise indicated.

EXAMPLES 1 - 5

A 1.9 cm (3/4 inch) Brabender extruder with a circular string die with a diameter of 0.16 (0.062 inches) was used to evaluate processability and extrudate quality. The LLDPE used in these examples is Mobil NTA-101, a copolymer of ethylene and hexene (MI = 1, density = 0.918 g/cm³) and the polyurethane is Mobay polyester based polyurethane (Texin 688-A, density = 1.20 g/cm³). The results are given in the table below.

TABLE 1

| Example | Wt. % Texin 688A | RPM | Pressure, kPa (PSI) | Torque, M-g. | Shear Rate Sec⁻¹ | Melt Fracture |
|---------|------------------|-----|---------------------|--------------|-------------------|---------------|
| Control | 0 | 30 | 17600 (2550) | 3250 | 100 | Yes |
|  |  | 50 | 20700 (3000) | 4000 | 165 | Yes |
|  |  | 80 | 22800 (3300) | 5100 | 290 | Yes |
| 1 | 1.0 | 30 | 15200 (2200) | 2300 | 100 | No |
|  |  | 50 | 19000 (2750) | 3200 | 165 | No |
|  |  | 80 | 21400 (3100) | 3900 | 290 | No |
| 2 | 1.0 | 30 | 15600 (2300) | 2400 | 100 | No |
|  |  | 50 | 19300 (2800) | 3300 | 165 | No |
| 3 | 0.5 | 50 | 19300 (2800) | 3400 | 165 | No |
| 4 | 0.1 | 50 | 19300 (2800) | 3400 | 165 | No |
| 5 | 0.05 | 50 | 19300 (2800) | 3500 | 165 | No |

Examples 1, 3, 4 and 5 were prepared by dry blending NTA-101 and NTA-101/Texin 688-A concentrate to give the overall composition as indicated.

The blends of Example 2 were prepared by dry blending NTA-101 and Texin 688-A directly.

## Claims

1. A composition which comprises a blend of a linear ethylene polymer and up to 5 weight percent of a thermoplastic polyurethane.

2. The composition according to claim 1 wherein the linear ethylene polymer comprises a linear low density polyethylene (LLDPE).

3. A composition according to claim 2 wherein the LLDPE comprises a copolymer of ethylene and a higher olefin.

4. A composition according to claim 3 wherein the LLDPE comprises a copolymer of ethylene and hexene.

5. A composition according to any precceding claim wherein the LLDPE has a density of less than 0.93.

6. A composition according to any preceeding claim wherein the thermoplastic polyurethane polymer comprises from 0.05 to 3 weight percent of the composition.

7. A composition according to any preceeding claim in the form of a film.

8. The use of a minor amount of a thermoplastic polyurethane in a blend with a linear ethylene polymer to reduce extruder torque and head pressure encountered in the extrusion of the linear polymer of ethylene.

3